# EUROPÄISCHE PATENTANMELDUNG

(11) **EP 3 404 235 A1**
(43) Veröffentlichungstag der Anmeldung: **21.11.2018**
(21) Anmeldenummer: 18167238.7
(22) Anmeldetag: 13.04.2018
(51) Int. Cl.: F02D 19/06, F02B 25/04, F02M 61/08, F02M 61/16, F02M 45/12, F02B 23/02

(54) **GROSSDIESELMOTOR UND VERFAHREN ZUM BETREIBEN EINES GROSSDIESELMOTORS**

(30) Priorität: 19.05.2017 EP 17171906
(71) Anmelder: Winterthur Gas & Diesel AG, 8401 Winterthur (CH)
(72) Erfinder: Schmid, Andreas, 8260 Stein am Rhein (CH); Yildirim, Turhan, 8408 Winterthur (CH)
(74) Vertreter: Intellectual Property Services GmbH

(57) **Zusammenfassung**

Es wird ein Grossdieselmotor, insbesondere ein längsgespülter Zweitakt-Grossdieselmotor, vorgeschlagen, mit mindestens einem Zylinder (2), in welchem ein Kolben (3) zwischen einem unteren und einem oberen Umkehrpunkt hin- und her bewegbar angeordnet ist, mit einem Zylinderdeckel (5), wobei der Zylinderdeckel (5) und der Kolben (3) einen Brennraum (6) für einen Brennstoff begrenzen, sowie mit einer Brennstoffeinspritzdüse (7) zum Einbringen des Brennstoffs in den Brennraum (6), wobei die Brennstoffeinspritzdüse (7) eine konische Sitzfläche (73) umfasst, welche sich in Richtung des Brennraums (6) erweitert, sowie einen Schliesskörper (74), welcher in einer Schliessstellung dichtend mit der Sitzfläche (73) zusammenwirkt, und welcher durch eine Hubbewegung von der Sitzfläche (73) abhebbar ist, sodass zwischen der Sitzfläche (73) und dem Schliesskörper (74) eine ringförmige Düsenöffnung ausgebildet ist, durch welche der Brennstoff in den Brennraum (6) einbringbar ist. Ferner wird ein Verfahren zum Betreiben eines solchen Grossdieselmotors (1) vorgeschlagen.

## Beschreibung

Die Erfindung betrifft einen Grossdieselmotor, insbesondere einen längsgespülten Zweitakt-Grossdieselmotor, sowie ein Verfahren zum Betreiben eines Grossdieselmotors gemäss dem Oberbegriff des unabhängigen Patentanspruchs der jeweiligen Kategorie.

Grossdieselmotoren, wie beispielsweise längsgespülte Zweitakt-Grossdieselmotoren, werden häufig als Antriebsaggregate für Schiffe oder auch im stationären Betrieb, z.B. zum Antrieb grosser Generatoren zur Erzeugung elektrischer Energie eingesetzt. Dabei laufen die Motoren in der Regel über beträchtliche Zeiträume im Dauerbetrieb, was hohe Anforderungen an die Betriebssicherheit und die Verfügbarkeit stellt. Daher sind für den Betreiber insbesondere lange Wartungsintervalle, geringer Verschleiss und ein wirtschaftlicher Umgang mit den Betriebsstoffen zentrale Kriterien. Grossdieselmotoren bzw. Grossmotoren haben typischerweise Zylinder, deren Innendurchmesser (Bohrung) mindestens 200 mm beträgt. Heutzutage werden Grossmotoren mit einer Bohrung von bis zu 960 mm oder sogar noch mehr eingesetzt.

Seit einigen Jahren ist auch mit zunehmender Bedeutung die Qualität der Abgase, insbesondere die Stickoxid Konzentration in den Abgasen, ein wesentlicher Aspekt. Das hat insbesondere bei Zweitakt-Grossdieselmotoren zur Folge, dass die Verbrennung des klassischen, mit Schadstoffen hoch belasteten Schweröls, aber auch die Verbrennung von Dieselöl oder anderen Brennstoffen problematischer wird, weil die Einhaltung der Abgasgrenzwerte immer schwieriger, technisch aufwändiger und damit teurer wird oder am Ende deren Einhaltung gar nicht mehr sinnvoll möglich ist.

In der Praxis besteht daher bereits seit langem das Bedürfnis nach sogenannten "Dual-Fuel Motoren", also Motoren, die mit zwei unterschiedlichen Brennstoffen betrieben werden können. In einem Gasmodus wird ein Gas, z.B. ein Erdgas wie LNG (liquefied natural gas), oder ein anderes zum Antrieb einer Brennkraftmaschine geeignetes Gas oder Gasgemisch verbrannt, während in einem Flüssigmodus ein geeigneter flüssiger Brennstoff wie Diesel oder Schweröl in demselben Motor verbrannt werden kann.

Mit dem Begriff "Grossdieselmotor" sind im Rahmen dieser Anmeldung auch solche Grossmotoren gemeint, die ausser im Dieselbetrieb, der durch die Selbstzündung des Brennstoffs gekennzeichnet ist, auch in einem Ottobetrieb, der durch die Fremdzündung des Brennstoffs gekennzeichnet ist, oder in Mischformen aus diesen beiden betrieben werden kann. Ferner umfasst der Begriff Grossdieselmotor insbesondere auch die genannten Dual-Fuel-Motoren und solche Grossmotoren, bei denen die Selbstzündung des Brennstoffs zur Fremdzündung eines anderen Brennstoffs genutzt wird.

Im Flüssigmodus wird üblicherweise der Brennstoff direkt in den Brennraum des Zylinders eingebracht und verbrennt dort nach dem Prinzip der Selbstzündung. Im Gasmodus ist es bekannt, nach dem Otto-Prinzip das Gas im gasförmigen Zustand mit der Spülluft zu vermischen, um so im Brennraum des Zylinders ein zündfähiges Gemisch zu erzeugen. Bei diesem Niederdruckverfahren erfolgt die Zündung des Gemisches im Zylinder üblicherweise, indem im richtigen Moment eine kleine Menge flüssigen Brennstoffs in den Brennraum des Zylinders oder in eine Vorkammer eingespritzt wird, die dann zur Zündung des Luft-Gas-Gemisches führt. Ein Dual-Fuel Motor kann während des Betriebs vom Gasmodus in den Flüssigmodus umgeschaltet werden und umgekehrt.

Wird ein Grossdieselmotor mit flüssigem Brennstoff, also beispielsweise Schweröl oder Dieselöl, betrieben, so werden üblicherweise zum Einbringen des Brennstoffs in den Brennraum des Zylinders Brennstoffeinspritzdüsen verwendet, die einen Düsenkörper und einen Düsenkopf aufweisen. Der Düsenkopf wird auch als Zerstäuber bezeichnet. Im Düsenkopf sind in der Regel mehrere Düsenöffnungen vorgesehen, durch welche der Brennstoff unter hohem Druck, beispielsweise bis zu 800 bar oder mehr, in den Brennraum eingespritzt wird. Um den Einspritzvorgang zu beginnen oder zu beenden, ist in der Brennstoffeinspritzdüse eine bewegliche Düsennadel vorgesehen, die mit einem Ventilsitz derart zusammenwirkt, dass der Durchgang zu den Düsenöffnungen entweder geöffnet oder geschlossen wird.

Im Hinblick auf einen möglichst wirtschaftlichen, effizienten und schadstoffarmen Betrieb, sowie auf einen möglichst geringen Brennstoffverbrauch, ist man bemüht, den flüssigen Brennstoff möglichst optimal in die im Brennraum befindliche Luft einzubringen, welche üblicherweise unter einer Drallströmung steht. Das Einspritzen des Brennstoffs unter Hochdruck, seine Zerstäubung sowie die Drallströmung der Luft im Brennraum sollen dabei zu einer möglichst guten Gemischbildung im Brennraum führen, um einen möglichst effizienten und schadstoffarmen Verbrennungsprozess zu gewährleisten. Zu diesem Zweck ist bereits eine Vielzahl von verschiedenen Düsenköpfen bekannt, die üblicherweise mehr als eine Düsenöffnung umfassen, um so mithilfe mehrerer Brennstoffstrahlen, welche beispielsweise unter unterschiedlichen Winkeln in den Brennraum bzw. die Drallströmung der Luft eingebracht werden, um eine gute Gemischbildung zu gewährleisten. Natürlich ist es auch bekannt, und bei Grossdieselmotoren durchaus üblich, für eine gute Gemischbildung mehr als eine Brennstoffeinspritzdüse pro Zylinder vorzusehen, wobei der Düsenkopf jeder Brennstoffeinspritzdüse mehrere Düsenöffnungen aufweisen kann. Trotz alle der bekannten Ausgestaltungen, besteht hinsichtlich einer möglichst guten Einbringung des Brennstoffs in den Brennraum immer noch Verbesserungsbedarf.

Ein weiteres bekanntes Problem bezüglich der Brennstoffeinbringung in den Brennraum resultiert daraus, dass der Ventilsitz, der den Durchlass für den Brennstoff zu den Düsenöffnungen öffnet oder schliesst, üblicherweise etwas entfernt von den Düsenöffnungen angeordnet ist, um ihn vor dem hohen thermischen, mechanischen und chemischen Belastungskollektiv zu schonen, welchem der Düsenkopf ausgesetzt ist. Die mechanischen Belastungen beruhen unter anderem auf dem hohen Einspritzdruck. Die thermischen Belastungen werden durch die hohen Temperaturen im Brennraum und die enormen Temperaturwechsel zwischen Verbrennungstemperatur und Temperatur der frisch zugeführten Spül- oder Ladeluft verursacht, während die chemischen Belastungen hauptsächlich in der Hochtemperatur- oder Heisskorrosion begründet liegen.

Daher ist üblicherweise stromabwärts des Ventilsitzes im Düsenkopf eine als Sacklochbohrung ausgestaltete Längsbohrung vorgesehen, von welcher Bohrungen abzweigen, die zu den Düsenöffnungen führen.

Die räumliche Entfernung zwischen Ventilsitz und Düsenöffnungen bringt folgendes Problem mit sich. Beim Beenden der Brennstoffeinspritzung wird die Düsennadel in den Ventilsitz gedrückt, sodass der Brennstoff, der sich stromabwärts des Ventilsitzes - also zwischen Ventilsitz und Düsenlöchern - in der Sacklochbohrung befindet, nicht mehr mit dem Speisedruck beaufschlagt wird. Dieser Teil des Brennstoffs kann zu unerwünschten Ablagerungen im Düsenkopf führen und nach Beendigung der Einspritzung durch die Düsenöffnungen schlecht zerstäubt in den Brennraum gelangen, oder dort hinein tropfen, wo er jedoch nur wenig oder gar nicht verbrennt. Dies führt zu einem erhöhten Brennstoffverbrauch, zu zusätzlichen Schadstoffbelastungen des Abgases insbesondere mit Sickoxiden NOₓ, sowie zu Ablagerungen von unverbranntem Brennstoff an allen Teilen des Brennraums und der abgasführenden Komponenten.

Diesen mit der Einbringung des flüssigen Brennstoffs in den Brennraum verbundenen Problemen widmet sich die Erfindung.

Ausgehend von diesem Stand der Technik ist es daher eine Aufgabe der Erfindung, einen Grossdieselmotor, insbesondere einen längsgespülten Zweitakt-Grossdieselmotor vorzuschlagen, bei welchem eine besonders gute Einbringung eines flüssigen Brennstoffs in den Brennraum ermöglicht wird, mit der ein besonders wirtschaftlicher, effizienter und schadstoffarmer Betrieb realisierbar ist. Ferner ist es eine Aufgabe der Erfindung, ein Verfahren zum Betreiben eines Grossdieselmotors vorzuschlagen, welches eine besonders günstige Einbringung eines flüssigen Brennstoffs in den Brennraum ermöglicht.

Die diese Aufgabe lösenden Gegenstände der Erfindung sind durch die Merkmale des unabhängigen Anspruchs der jeweiligen Kategorie gekennzeichnet.

Erfindungsgemäss wird also ein Grossdieselmotor, insbesondere ein längsgespülter Zweitakt-Grossdieselmotor, vorgeschlagen, mit mindestens einem Zylinder, in welchem ein Kolben zwischen einem unteren und einem oberen Umkehrpunkt hin- und her bewegbar angeordnet ist, mit einem Zylinderdeckel, wobei der Zylinderdeckel und der Kolben einen Brennraum für einen Brennstoff begrenzen, sowie mit einer Brennstoffeinspritzdüse zum Einbringen des Brennstoffs in den Brennraum, wobei die Brennstoffeinspritzdüse eine konische Sitzfläche umfasst, welche sich in Richtung des Brennraums erweitert, sowie einen Schliesskörper, welcher in einer Schliessstellung dichtend mit der Sitzfläche zusammenwirkt, und welcher durch eine Hubbewegung von der Sitzfläche abhebbar ist, sodass zwischen der Sitzfläche und dem Schliesskörper eine ringförmige Düsenöffnung ausgebildet ist, durch welche der Brennstoff in den Brennraum einbringbar ist.

Bei dem erfindungsgemässen Grossdieselmotor ist also die Düsenöffnung der Brennstoffeinspritzdüse, durch welche der Brennstoff in den Brennraum des Zylinders eingebracht wird, als eine ringförmige Düsenöffnung ausgestaltet, welche von der sich konisch in Richtung des Brennraums erweiternden Sitzfläche begrenzt wird. Dies hat zur Folge, dass der Brennstoff in Form eines Hohlkegels bzw. eines Hohlkegelstumpfes in den Brennraum eingebracht wird. Dieser hohlkegelförmige Brennstoffstrahl führt zu einer besonders guten räumlichen Verteilung des Brennstoffs im Brennraum, woraus eine sehr gute, insbesondere homogene, Gemischbildung mit der Spül- oder Ladeluft resultiert. Dies ermöglicht eine besonders effiziente und schadstoffarme Verbrennung. Zudem hat sich gezeigt, dass in dem hohlkegelförmigen Brennstoffstrahl hohe Turbulenzen herrschen, welche die Durchmischung mit dem drallbeaufschlagten Ladeluftstrom im Brennraum in positiver Weise fördern. Diese besonders günstige Gemischbildung im Brennraum ermöglicht einen wirtschaftlichen, effizienten und schadstoffarmen Betrieb des Grossdieselmotors.

Die ringförmige, sich über den gesamten Umfang der Sitzfläche bzw. des Schliesskörpers erstreckende Düsenöffnung hat ferner den Vorteil, dass sie einen im Vergleich zu bekannten Grossdieselmotoren besonders niedrigen Einspritzdruck des Brennstoffs ermöglicht, weil die Zerstäubung des Brennstoffs bereits mit der ringförmigen Geometrie der Düsenöffnung und der dadurch bedingten hohlkegelförmigen Verteilung des in den Brennraum eintretenden Brennstoffs erfolgt. So kann der erfindungsgemässe Grossdieselmotor beispielsweise mit einem Einspritzdruck von 100-500 bar betrieben werden. Ein niedriger Einspritzdruck hat unmittelbar einen positiven Einfluss auf den Brennstoffverbrauch. Der Brennstoffverbrauch sinkt, weil weniger Arbeit benötigt wird, um den Brennstoff unter Druck zu setzen.

Ein weiterer Vorteil der erfindungsgemäss vorgeschlagenen Lösung im Vergleich zu bekannten Brennstoffeinspritzdüsen für Grossdieselmotoren besteht darin, dass die Brennstoffeinspritzdüse des erfindungsgemässen Grossdieselmotors keine Sacklochbohrung und damit auch kein Sacklochvolumen aufweist, aus welchem nach Beendigung des Einspritzvorgangs Brennstoff in den Brennraum hineintropfen könnte. Da der Schliesskörper räumlich unmittelbar an der Sitzfläche vorgesehen ist, und somit selbst die Düsenöffnung begrenzt oder verschliesst, existiert stromabwärts des Schliesskörpers bzw. der Düsenöffnung auch kein Sacklochvolumen oder Totvolumen. Das dichtende Zusammenwirken des Schliesskörpers mit der Sitzfläche beim Beenden des Einspritzvorgangs beendet unmittelbar das Eindringen von Brennstoff in den Brennraum. Die eingangs beschriebenen Probleme, welche aus der räumlichen Entfernung zwischen Ventilsitz und Düsenöffnungen in bekannten Brennstoffeinspritzdüsen in Grossdieselmotoren existieren, werden durch die erfindungsgemässe Ausgestaltung ebenfalls gelöst und die damit verbundenen negativen Effekte werden vermieden. Auch dies wirkt sich vorteilhaft im Hinblick auf einen wirtschaftlichen und schadstoffarmen Betrieb des Grossdieselmotors aus. Insbesondere werden auch Verkokungen oder Ablagerungen von Rückständen im Brennraum und den abgasführenden Komponenten zumindest reduziert, wodurch sich die Lebensdauer erhöht bzw. die Wartungsintervalle verlängern.

Gemäss einer bevorzugten Ausgestaltung ist eine Ansteuervorrichtung für den Schliesskörper vorgesehen, mit welcher die Amplitude der Hubbewegung des Schliesskörpers einstellbar ist, sodass ein offener Strömungsquerschnitt der Düsenöffnung veränderbar ist. Dies hat den Vorteil, dass der für den Brennstoff zum Einströmen in den Brennraum zur Verfügung stehende Strömungsquerschnitt auf quasi beliebige Werte zwischen Null, was der Schliessstellung entspricht, in welcher der Schliesskörper dichtend mit der Sitzfläche zusammenwirkt, und einem Höchstwert einstellbar ist, wobei der Höchstwert der maximalen Offenstellung entspricht, welche durch die maximale Amplitude der Hubbewegung des Schliesskörpers realisiert wird.

Durch diese Massnahme kann der offene Strömungsquerschnitt auch während eines Einspritzvorgangs variiert werden, das heisst, der zeitliche Verlauf der eingespritzten Brennstoffmenge während eines Einspritzvorgangs kann durch die Änderung des Hubs des Schliesskörpers in kontrollierter Weise aktiv eingestellt werden. Diese vollkommen flexible Art der Einbringung des Brennstoffs ermöglicht eine Optimierung der Brennstoffeinspritzung. So kann beispielsweise die Eindringtiefe des Brennstoff-Hohlkegels in den Brennraum kontrolliert werden. Auch kann der Einspritzverlauf, also der zeitliche Verlauf der bei einem Einspritzvorgang in den Brennraum eingebrachten Brennstoffmenge, durch die Änderung des Hubs des Schliesskörpers - und damit des offenen Strömungsquerschnitts - kontrolliert beeinflusst und eingestellt werden. Insbesondere ist es möglich, einen gewünschten Einspritzverlauf vorzugeben und diesen dann durch eine entsprechende Variation des Hubs des Schliesskörpers zu realisieren. Der jeweils gewünschte Einspritzverlauf kann beispielsweise von dem Lastbereich abhängen, in welchem der Motor betrieben wird, sodass die Brennstoffeinspritzung über den gesamten Lastbereich von Leerlauf über Teillast bis Volllast jeweils optimierbar ist. Auch ist es möglich, den Einspritzverlauf unter dem Aspekt der Temperatur verschiedener Komponenten zu optimieren, z. B. der Komponenten der Brennstoffeinspritzdüse(n), des Abgas- oder Gaswechselsystems oder des Kolbens.

Diese Variation des offenen Strömungsquerschnitts ist ein grosser Vorteil gegenüber bekannten Brennstoffeinspritzdüsen in Grossdieselmotoren, die typischerweise nur zwischen zwei Stellungen schaltbar sind, nämlich einer Offenstellung, in welcher ein fest vorgegebener Strömungsquerschnitt für das Einströmen des Brennstoffs in den Brennraum geöffnet ist, und einer Schliessstellung, in welcher kein Brennstoff in den Brennraum strömt. Der offene Strömungsquerschnitt während des Einspritzvorgangs ist also fixiert. Daher ist der Brennstofffluss in den Brennraum - zumindest näherungsweise - direkt proportional zum Einspritzdruck bzw. zum Druck im Brennstoffdruckspeicher (Rail). Das bedeutet, dass der Massenfluss des Brennstoffs in den Brennraum nur über den Einspritzdruck einstellbar ist. Bei der bevorzugten Ausgestaltung der Erfindung mit variablem Strömungsquerschnitt ist dagegen der Massenstrom des Brennstoffs in den Brennraum zumindest weitgehend vom Einspritzdruck entkoppelt, in dem Sinne, dass auch bei konstantem Einspritzdruck der Massenstrom des Brennstoffs während des Einspritzvorgangs kontrolliert veränderbar ist. Dies hat den Vorteil, dass der Einspritzdruck beispielsweise im Hinblick auf eine möglichst gute Zerstäubung optimiert werden kann.

Im Hinblick auf die im Grossdieselmotor wirkenden Kräfte ist es bevorzugt, wenn die Ansteuervorrichtung als hydraulische Ansteuervorrichtung ausgestaltet ist.

Eine vorteilhafte Massnahme besteht darin, dass ein Federelement vorgesehen ist, welches den Schliesskörper in Richtung der Schliessstellung vorspannt. Somit ist sichergestellt, dass der Schliesskörper jeweils vor und nach der Einspritzung dichtend mit der Sitzfläche zusammenwirkt und nur für die Einspritzung gegen die Kraft der Feder von der Sitzfläche abgehoben wird.

Da in einem Grossdieselmotor der maximale Durchmesser des Brennraums im Vergleich zu seiner Höhe in Richtung der Längsachse des Zylinders bei der Einspritzung vergleichsweise gross ist, ist es bevorzugt, dass sich die konische Sitzfläche unter einem Winkel von mindestens 90° erweitert. Hierdurch lässt sich eine gute räumliche Verteilung des Brennstoffs im Brennraum erreichen.

Besonders bevorzugt erweitert sich die konische Sitzfläche unter einem Winkel, der grösser als 90° ist, vorzugsweise grösser als 100°, und der höchstens 140° beträgt.

Bezüglich der Anordnung der Brennstoffeinspritzdüse sind mehrere Varianten möglich. Eine bevorzugte Ausführungsform besteht darin, dass die Brennstoffeinspritzdüse zentral im Zylinderdeckel angeordnet ist, sodass sie mit der Längsachse des Zylinders fluchtet.

Insbesondere bei dieser Ausführungsform mit der zentralen Anordnung der Brennstoffeinspritzdüse im Zylinderdeckel ist vorzugsweise mindestens einem Auslassventil vorgesehen, durch welches die Verbrennungsgase aus dem Zylinder abführbar sind, wobei das Auslassventil dezentral, vorzugsweise seitlich, im Zylinderdeckel angeordnet ist.

Gemäss einer anderen bevorzugten Ausführungsform ist mindestens ein Auslassventil vorgesehen, durch welches die Verbrennungsgase aus dem Zylinder abführbar sind, wobei das Auslassventil zentral im Zylinderdeckel angeordnet ist, sodass die Längsachse des Auslassventils mit der Längsachse des Zylinders fluchtet.

In einer anderen bevorzugten Ausgestaltung weist jeder Zylinder eine Mehrzahl von Auslassventilen auf, durch welche die Verbrennungsgase aus dem Zylinder abführbar sind, und wobei die Auslassventile im Zylinderdeckel und um die Brennstoffeinspritzdüse herum angeordnet sind. Besonders bevorzugt ist es bei dieser Ausgestaltung wenn jeder Zylinder jeweils vier Auslassventile aufweist, die um die Brennstoffeinspritzdüse herum verteilt im Zylinderdeckel angeordnet sind.

In einem anderen ebenfalls bevorzugten Ausführungsbeispiel ist die Brennstoffeinspritzdüse im Kolben angeordnet. Insbesondere weil es die erfindungsgemässe Ausgestaltung der Brennstoffeinspritzdüse ermöglicht, den Grossdieselmotor mit einem deutlich geringeren Einspritzdruck für den Brennstoff zu betreiben als in bekannten Grossdieselmotoren, kann die Brennstoffeinspritzdüse auch im Kolben, vorzugsweise zentral in der dem Brennraum zugewandten Oberfläche des Kolbens, vorgesehen sein, derart, dass die Brennstoffeinspritzdüse in den Brennraum hineinragt.

Eine weitere bevorzugte Massnahme besteht darin, dass für jeden Zylinder eine Mehrzahl von Brennstoffeinspritzdüsen vorgesehen ist, wobei jede Brennstoffeinspritzdüse eine konische Sitzfläche umfasst, welche sich in Richtung des Brennraums erweitert, sowie einen Schliesskörper, welcher in einer Schliessstellung dichtend mit der Sitzfläche zusammenwirkt, und welcher durch eine Hubbewegung von der Sitzfläche abhebbar ist, sodass zwischen der Sitzfläche und dem Schliesskörper eine ringförmige Düsenöffnung ausgebildet ist, durch welche der Brennstoff in den Brennraum einbringbar ist.

Der erfindungsgemässe Grossdieselmotor kann insbesondere auch als Dual-Fuel Grossdieselmotor ausgestaltet sein, der in einem Flüssigmodus betreibbar ist, in welchem ein flüssiger Brennstoff zur Verbrennung in den Brennraum eingebracht wird, und der ferner in einem Gasmodus betreibbar ist, in welchem ein Gas als Brennstoff in den Brennraum eingebracht wird. Auch bei der Ausgestaltung als Dual-Fuel Motor kann der Motor insbesondere als längsgespülter Zweittakt-Grossdieselmotor ausgestaltet sein.

Durch die Erfindung wird ferner ein Verfahren zum Betreiben eines Grossdieselmotors vorgeschlagen, bei welchem der Grossdieselmotor erfindungsgemäss ausgestaltet ist, wobei der Brennstoff mit der Brennstoffeinspritzdüse in den Brennraum eingebracht wird, wobei die Brennstoffeinspritzdüse eine konische Sitzfläche umfasst, welche sich in Richtung des Brennraums erweitert, sowie einen Schliesskörper, welcher in einer Schliessstellung dichtend mit der Sitzfläche zusammenwirkt, und welcher durch eine Hubbewegung von der Sitzfläche abgehoben wird, sodass zwischen der Sitzfläche und dem Schliesskörper eine ringförmige Düsenöffnung ausgebildet wird, durch welche der Brennstoff in den Brennraum eingebracht wird. Dabei ist es bevorzugt, wenn für das Einbringen des Brennstoffs in den Brennraum ein Einspritzverlauf vorgegeben wird, und die Amplitude der Hubbewegung des Schliesskörpers während des Einbringens des Brennstoffs gemäss dem vorgegebenen Einspritzverlauf verändert wird.

Vorzugsweise wird der Brennstoff an jeder Brennstoffeinspritzdüse mit einem Einspritzdruck von höchstens 500 bar bereitgestellt.

Weitere vorteilhafte Massnahmen und Ausgestaltungen der Erfindung ergeben sich aus den abhängigen Ansprüchen.

Im Folgenden wird die Erfindung anhand von Ausführungsbeispielen und anhand der Zeichnung näher erläutert. In der Zeichnung zeigen:
- Fig. 1:: eine schematische Längsschnittdarstellung eines Zylinders eines Ausführungsbeispiels eines erfindungsgemässen Grossdieselmotors, und
- Fig. 2:: eine schematische Längsschnittdarstellung der Brennstoffeinspritzdüse des Grossdieselmotors aus Fig. 1.

Bei der folgenden Beschreibung der Erfindung wird mit beispielhaftem Charakter auf den für die Praxis besonders wichtigen Fall eines Grossdieselmotors Bezug genommen, der als längsgespülter Zweitakt-Grossdieselmotor ausgestaltet ist, und der als Hauptantriebsaggregat eines Schiffes verwendet wird. Natürlich ist die Erfindung nicht auf diesen Typ von Grossdieselmotor und auf diese Verwendung beschränkt, sondern betrifft Grossdieselmotoren im Allgemeinen. Der Grossdieselmotor kann beispielsweise auch als Viertakt-Motor ausgestaltet sein. Wie eingangs bereits erläutert, sind im Rahmen dieser Anmeldung mit dem Begriff "Grossdieselmotor" auch solche Grossmotoren gemeint, die ausser im Dieselbetrieb, der durch die Selbstzündung des Brennstoffs gekennzeichnet ist, auch in einem Ottobetrieb, der durch die Fremdzündung des Brennstoffs gekennzeichnet ist, oder in Mischformen aus diesen beiden betrieben werden kann. Ferner umfasst der Begriff Grossdieselmotor insbesondere auch diejenigen eingangs erläuterten Dual-Fuel-Motoren, die einerseits in einem Gasmodus betreibbar sind, in welchem ein Gas, z.B. ein Erdgases, verbrannt wird, und andererseits in einem Flüssigmodus, in welchem ein geeigneter flüssiger Brennstoff wie Methanol, Benzin, Diesel, Schweröl oder andere geeignete flüssige Brennstoffe verbrannt wird.

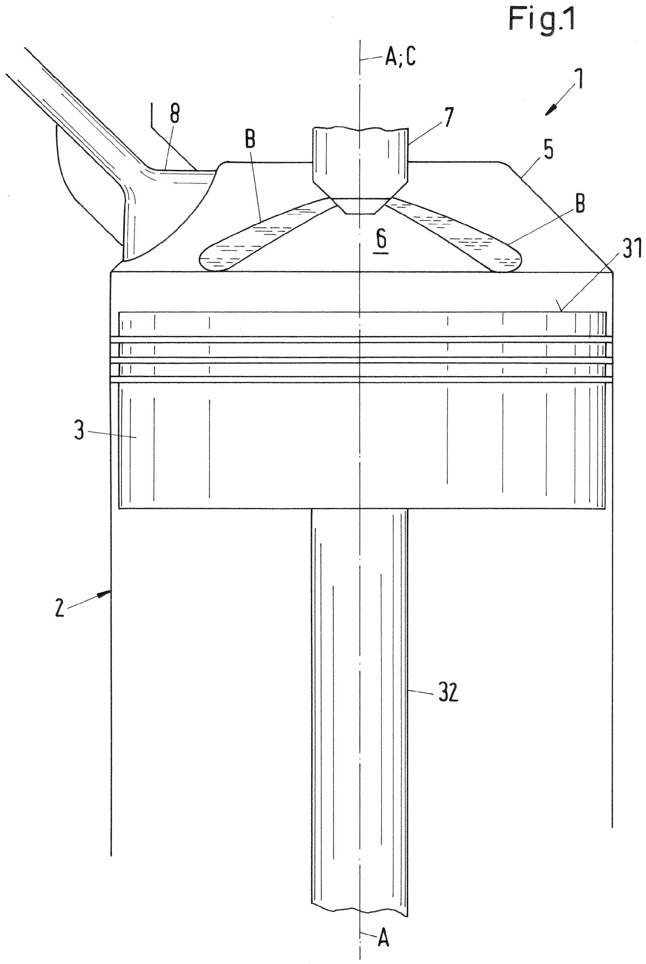

Fig. 1 zeigt in einer schematischen Längsschnittdarstellung einen Zylinder 2 eines Ausführungsbeispiels eines erfindungsgemässen Grossdieselmotors, der gesamthaft mit dem Bezugszeichen 1 bezeichnet ist, und welcher als längsgespülter Zweitakt-Grossdieselmotor ausgestaltet ist.

Mit dem Begriff "Grossdieselmotor" sind solche Motoren gemeint, wie sie üblicherweise als Hauptantriebsaggregate für Schiffe oder auch im stationären Betrieb, z.B. zum Antrieb grosser Generatoren zur Erzeugung elektrischer Energie eingesetzt werden. Typischerweise haben die Zylinder 2 eines Grossdieselmotors 1 jeweils einen Innendurchmesser (Bohrung), der mindestens etwa 200 mm beträgt.

Der Grossdieselmotor 1 umfasst in an sich bekannter Weise eine Mehrzahl von Zylindern 2, beispielsweise sechs bis zwölf Zylinder oder noch mehr, von denen in Fig. 1 nur einer dargestellt ist. Die Längsachse des Zylinders 2 ist mit dem Bezugszeichen A bezeichnet. Der Zylinder 2 ist an seinem darstellungsgemäss oberen Ende durch einen Zylinderdeckel 5 abgeschlossen. In jedem Zylinder 2 ist ein Kolben 3 vorgesehen, der jeweils zwischen einem oberen und einem unteren Totpunkt hin- und her bewegbar angeordnet ist, und dessen Oberseite 31 gemeinsam mit dem Zylinderdeckel 5 einen Brennraum 6 begrenzt. Der Kolben 3 ist über eine Kolbenstange 32 üblicherweise mit einem nicht dargestellten Kreuzkopf verbunden, welcher über eine Schubstange mit einer Kurbelwelle verbunden ist.

In den Brennraum 5 ragt eine Brennstoffeinspritzdüse 7 hinein, mit welcher ein flüssiger Brennstoff, z.B. Schweröl oder Diesel, in den Brennraum 6 einbringbar ist. Bei diesem Ausführungsbeispiel ist die Brennstoffeinspritzdüse 7 zentral im Zylinderdeckel 5 angeordnet, sodass sie mit der Längsachse A des Zylinders 2 fluchtet, das heisst die Achse C der Brennstoffeinspritzdüse 7 liegt auf der Längsachse A des Zylinders 2. Die Brennstoffeinspritzdüse 7 ist Teil eines nicht weiter dargestellten Einspritzsystems, das neben der Brennstoffeinspritzdüse 7 noch weitere Komponenten umfasst, wie beispielsweise einen Druckspeicher für den Brennstoff, der üblicherweise als Common-Rail Speicher ausgestaltet ist, Steuerventile, Pumpen und Verbindungsleitungen.

Im Zylinderdeckel 5 ist ferner ein Auslassventil 8 vorgesehen, durch welches die Verbrennungsgase aus dem Zylinder 2 abführbar und einem nicht dargestellten Abgassystem zuführbar sind. Bei diesem Ausführungsbeispiel ist das Auslassventil 8 dezentral, nämlich seitlich im Zylinderdeckel 5 angeordnet.

Der Aufbau und die einzelnen Komponenten des Grossdieselmotors 1, wie beispielsweise Einzelheiten des Einspritzsystems, das Gaswechselsystem, das Abgassystem oder das Turboladersystem für die Bereitstellung der Spül- bzw. Ladeluft, sowie das Kontroll- und Steuerungssystem für einen Grossdieselmotor 1 sind dem Fachmann sowohl für die Ausgestaltung als Zweitaktmotor als auch für die Ausgestaltung als Viertaktmotor hinlänglich bekannt und bedürfen daher hier keiner weiteren Erläuterung.

Der Grossdieselmotor 1 ist als elektronisch gesteuerter Motor ausgestaltet, bei welchem insbesondere das Gaswechselsystem und die Einbringung des jeweiligen Brennstoffs elektronisch gesteuert werden, d.h. die Betätigung der Auslassventile 8 und des Einspritzsystems bzw. des Gaszuführsystems (im Falle des Betriebs in einem Gasmodus) erfolgt mittels elektrischer oder elektronischer Signale von einer Kontroll- und Steuervorrichtung des Motors 1. Diese elektronische Steuerung bietet den Vorteil einer grösstmöglichen Flexibilität, weil solche Betriebsparameter wie der Beginn oder das Ende der Brennstoffzufuhr in die einzelnen Zylinder 2, oder der Zeitpunkt der Öffnung der Auslassventile 8 oder der Schliesszeitpunkt der Auslassventile 8 frei wählbar sind, und nicht, beispielsweise über eine mechanische Kopplung, an einen bestimmten Kurbelwinkel im Arbeitszyklus gebunden sind.

Bei dem hier beschriebenen Ausführungsbeispiel eines längsgespülten Zweitakt-Grossdieselmotors 1 sind üblicherweise im unteren Bereich eines jeden Zylinders 2 bzw. Zylinderliners Spülluftschlitze (nicht dargestellt) vorgesehen, die durch die Bewegung des Kolbens 3 im Zylinder 2 periodisch verschlossen und geöffnet werden, sodass die von dem Turbolader unter einem Ladedruck bereitgestellte Lade- oder Spülluft durch die Spülluftschlitze in den Zylinder 2 einströmen kann, solange diese geöffnet sind. Bei der Aufwärtsbewegung des Kolbens 3 werden die Spülluftschlitze verschlossen, und sobald das Auslassventil 8 geschlossen ist, beginnt die Kompression der Ladeluft im Zylinder 2, die mit einem Drall behaftet ist. Wenn sich der Kolben 3 in der Nähe seines oberen Umkehrpunkts befindet, wird mittels der Brennstoffeinspritzdüse 7 der flüssige Brennstoff in die komprimierte, drallbehaftete Ladeluft eingebracht und es kommt zur Selbstzündung des Brennstoff-Luftgemisches. Nach der Verbrennung und bei der Abwärtsbewegung des Kolbens wird das Auslassventil 8 geöffnet, durch welches dann die Verbrennungsgase aus dem Zylinder 2 in das Abgassystem ausgetragen werden können.

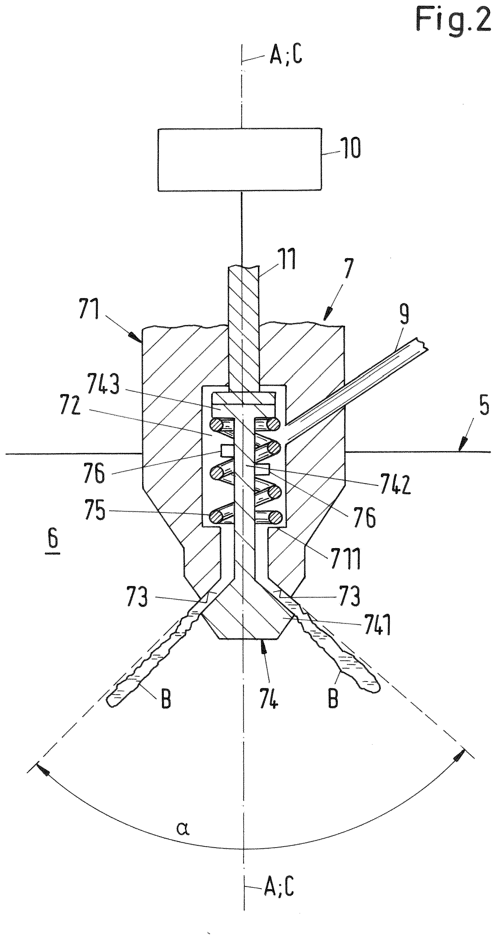

Im Folgenden wird nun die Brennstoffeinspritzdüse 7 näher erläutert. Zum besseren Verständnis zeigt Fig. 2 noch eine schematische Längsschnittdarstellung der Brennstoffeinspritzdüse 7 des Grossdieselmotors 1 aus Fig. 1.

Die Brennstoffeinspritzdüse 7, die in den Brennraum 6 hineinragt, umfasst ein Gehäuse 71, in welchem ein Druckraum 72 zur Aufnahme des unter Druck stehenden Brennstoffs vorgesehen ist. In den Druckraum 72 mündet eine Brennstoffzuführung 9, durch welche der Brennstoff aus einem nicht dargestellten Brennstoffvorrat, beispielsweise aus einem Druckspeicher eines Common-Rail Systems, in den Druckraum 72 strömen kann.

An ihrem brennraumseitigen Ende weist die Brennstoffeinspritzdüse 7, hier das Gehäuse 71 der Brennstoffeinspritzdüse 7, eine konische Sitzfläche 73 auf, welche sich in Richtung des Brennraums 6 erweitert, und welche sich symmetrisch um die Achse C der Brennstoffeinspritzdüse 7 herum erstreckt. Die Sitzfläche 73 ist als Mantelfläche eines Kegelstumpfs ausgestaltet, wobei der Kegelstumpf eine Symmetrieachse hat, die mit der Achse C der Brennstoffeinspritzdüse 7 übereinstimmt. Der Kegelstumpf, und damit die Sitzfläche 73, öffnet sich unter einem Winkel a, der mindestens 90° beträgt.

Ferner ist ein Schliesskörper 74 vorgesehen, welcher für das Zusammenwirken mit der Sitzfläche 73 ausgestaltet ist. Dazu umfasst der Schliesskörper 74 an seinem brennraumseitigen Ende einen kegelstumpfförmigen Teil 741, dessen kegelstumpfförmige Begrenzungsfläche mit der Sitzfläche 73 zusammenwirkt. Der kegelstumpfförmige Teil 741 ist beispielsweise mit einem Konuswinkel ausgestaltet, welcher gleich gross ist wie der Winkel a, unter welchem sich die Sitzfläche 73 erweitert. Auf der dem Brennraum 6 abgewandten Seite schliesst sich an den kegelstumpfförmigen Teil 741 ein stabförmiger Teil 742 an, der zylindrisch ausgestaltet ist und sich in Richtung der Achse C und konzentrisch mit dieser erstreckt. An dem Ende des stabförmigen Teils 742, welches dem kegelstumpfförmigen Teil 741 abgewandt ist, ist ein scheibenförmiges Element 743 vorgesehen, welches konzentrisch zur Achse C angeordnet ist, und welches mit einem Betätigungsorgan 11 einer Ansteuervorrichtung 10 für den Schliesskörper 74 zusammenwirkt. Die Ansteuervorrichtung 10 ist vorzugsweise als hydraulische Ansteuervorrichtung ausgestaltet, dass heisst die Bewegung des Betätigungsorgans 11 wird mithilfe hydraulischer Kräfte bewirkt.

Der Schliesskörper 74 mit dem kegelstumpfförmigen Teil 741, dem stabförmigen Teil 742 und dem scheibenförmigen Element 742 ist zentral im Gehäuse 71 der Brennstoffeinspritzdüse 7 und konzentrisch mit der Achse C angeordnet. Er erstreckt sich vom brennraumseitigen Ende der Brennstoffeinspritzdüse 7 zentral durch den Druckraum 72. Vorzugsweise ist der Schliesskörper 74 rotationssymmetrisch bezüglich der Achse C ausgestaltet und angeordnet.

Der Schliesskörper 74 ist so im Gehäuse 71 angeordnet, dass sein kegelstumpfförmiger Teil 741 von der durch die Sitzfläche 73 begrenzten Kavität aufgenommen wird. In einer Schliessstellung wirkt der Schliesskörper 74 dichtend mit der konischen Sitzfläche 73 zusammen, sodass kein Brennstoff aus dem Druckraum 72 in den Brennraum 6 strömen kann. Um den Schliesskörper 74 in Richtung seiner Schliessstellung vorzuspannen, ist eine Feder 75 vorgesehen, die sich einerseits an dem scheibenförmigen Element 743 des Schliesskörpers 74 und andererseits an einer sich konzentrisch zur Achse C erstreckenden Schulter 711 des Gehäuses 71 abstützt. Die Feder 75 ist um den stabförmigen Teil 742 des Schliesskörpers 74 herum angeordnet und übt auf das scheibenförmige Element 743 eine darstellungsgemäss nach oben gerichtete Kraft aus, durch welche der Schliesskörper 74 dichtend in die konische Sitzfläche 73 gepresst wird.

Zum Einbringen des Brennstoffs in den Brennraum 6 wird der Schliesskörper von der Ansteuervorrichtung 10 durch eine in Richtung des Brennraums 6 gerichtete Hubbewegung von der Sitzfläche 73 abgehoben, sodass sich zwischen der Sitzfläche 73 und dem kegelstumpfförmigen Teil 741 des Schliesskörpers 74 eine ringförmige Düsenöffnung ausbildet, durch welche der Brennstoff aus dem Druckraum 72 in den Brennraum 6 strömen kann. Die Fig. 1 und 2 zeigen die Brennstoffeinspritzdüse 7 jeweils im geöffneten Zustand.

Durch die kegelstumpfförmige Ausgestaltung der Sitzfläche 73 und des kegelstumpfförmigen Teils 741 des Schliesskörpers 74 wird dabei der Brennstoff in Form eines hohlkegelförmigen Strahls B in den Brennraum 6 eingebracht. Der Brennstoff wird also auf ein hohlkegelförmiges Profil verteilt, wodurch eine besonders gute Zerstäubung des Brennstoffs und eine sehr gute Durchmischung mit der Ladeluft im Brennraum 6 erzielt werden.

Die Ansteuervorrichtung 10 ist dabei vorzugsweise so ausgestaltet, dass die Amplitude der Hubbewegung des Schliesskörpers 74 einstellbar ist, sodass der offene Strömungsquerschnitt der Düsenöffnung zwischen der Sitzfläche 73 und dem Schliesskörper 74 variiert werden kann. Dazu bewegt die Ansteuervorrichtung 10 das Betätigungsorgan 11 um einen kontrollierbaren und einstellbaren Wert darstellungsgemäss nach unten, wodurch das Betätigungsorgan 11 über das scheibenförmige Element 743 den Schliesskörper 74 gegen die Kraft der Feder 75 in Richtung des Brennraums 6 aus der Sitzfläche 73 heraushebt. Dabei ist die Amplitude der Hubbewegung des Schliesskörpers wählbar bzw. veränderbar. Das heisst, dass der für den Brennstoff zum Einströmen in den Brennraum 6 zur Verfügung stehende Strömungsquerschnitt auf quasi beliebige Werte zwischen Null, was der Schliessstellung entspricht, in welcher der Schliesskörper 74 dichtend mit der Sitzfläche 73 zusammenwirkt, und einem Höchstwert einstellbar ist, wobei der Höchstwert der maximalen Offenstellung entspricht, welche durch die maximale Amplitude der Hubbewegung des Schliesskörpers 74 realisiert wird. Insbesondere kann die Amplitude der Hubbewegung des Schliesskörpers 74 und damit der offene Strömungsquerschnitt zwischen Sitzfläche 73 und Schliesskörper 74 auch während eines Einspritzvorgangs variiert werden. Hiermit lässt sich der Einspritzverlauf, also der zeitliche Verlauf der in den Brennraum 6 eingebrachten Brennstoffmenge, aktiv kontrollieren und einstellen.

Optional kann der Schliesskörper 74, vorzugsweise an seinem stabförmigen Teil 742 mehrere Flügel 76 aufweisen, die jeweils drehfest mit dem Schliesskörper 74 verbunden sind. Befindet sich die Brennstoffeinspritzdüse 7 in einem geöffneten Zustand, so verursacht der durch den Druckraum 72 strömende Brennstoff eine Krafteinwirkung auf die Flügel 76, wodurch der Schliesskörper 74 um die Achse C der Brennstoffeinspritzdüse 7 gedreht wird. Diese Drehbewegung gewährleistet eine über den Umfang betrachtete gleichmässige Belastung insbesondere der Sitzfläche 73 und des kegelstumpfförmigen Teils 741 des Schliesskörpers 74, wodurch der Verschleiss oder andere Degradationserscheinungen minimiert werden.

Während des Betriebs des Grossdieselmotors 1 ist der Druckraum 72 ständig mit dem unter dem Einspritzdruck stehenden Brennstoff gefüllt, welcher durch die Brennstoffzuführung 9 in den Druckraum strömen kann. Der Brennstoff wird dabei beispielsweise von dem Druckspeicher eines Common-Rail Systems unter dem Einspritzdruck bereitgestellt. Solange sich der Schliesskörper 74 der Brennstoffeinspritzdüse in seiner Schliessstellung befindet, in welcher der Schliesskörper 74 dichtend mit der Sitzfläche 73 zusammenwirkt, kann kein Brennstoff aus dem Druckraum 72 in den Brennraum 6 strömen. Zur Initialisierung eines Einspritzvorgangs wird die Ansteuervorrichtung 10 beispielsweise von der Kontroll- und Steuervorrichtung des Grossdieselmotors 1 mit Hilfe eines Signals veranlasst, mittels einer darstellungsgemäss abwärtsgerichteten Bewegung des Betätigungsorgans 11 eine Hubbewegung vorgebbarer Amplitude des Schliesskörpers 74 zu bewirken, wodurch der Schliesskörper 74 um eine vorbestimmte Distanz in Richtung des Brennraums 6 von der Sitzfläche 73 abgehoben wird. Dadurch öffnet sich zwischen dem kegelstumpfförmigen Teil 741 des Schliesskörpers 74 und der konischen Sitzfläche 73 eine ringförmige Düsenöffnung, durch welche der Brennstoff aus der Druckkammer 72 in den Brennraum 6 einströmen kann. Dabei ist der offene Strömungsquerschnitt der ringförmigen Düsenöffnung durch die Amplitude der Hubbewegung des Schliesskörpers 74 vorgegeben und damit kontrolliert einstellbar und variabel. Im Brennraum 6 beginnt dann der Verbrennungsprozess durch Selbstzündung, wobei der Verbrennungsprozess üblicherweise im Grossdieselmotor 1 bereits vor der Beendigung des Einspritzvorgangs beginnt.

Zum Beendigen des Einspritzvorgangs wird die von dem Betätigungsorgan 11 auf den Schliesskörper 74 ausgeübte Kraft "abgeschaltet", beispielsweise durch eine Druckentlastung des hydraulisch angetriebenen Betätigungsorgans 11. Folglich wird der Schliesskörper 74 mittels der Federkraft der Feder 75 in die Schliessstellung gebracht und dort gehalten. Dann kann kein weiterer Brennstoff mehr aus der Druckkammer 72 in den Brennraum 6 strömen und der Einspritzvorgang ist beendet.

Ein besonderer Vorteil für den Betrieb des Grossdieselmotors 1 besteht darin, dass bei dieser Ausgestaltung mit variablem offenen Strömungsquerschnitt der Düsenöffnung der Einspritzverlauf, also der zeitliche Verlauf der bei einem Einspritzvorgang eingebrachten Brennstoffmenge, in kontrollierter Weise einstellbar und damit auch optimierbar ist. So kann - beispielsweise in Abhängigkeit von der momentanen Last, mit welcher der Grossdieselmotor 1 betrieben wird - ein gewünschter Einspritzverlauf für einen Einspritzvorgang vorgegeben werden. Die Ansteuervorrichtung 10 variiert dann während des Einspritzvorgangs über die Amplitude des Hubs des Schliesskörpers 74 den offenen Strömungsquerschnitt der ringförmigen Düsenöffnung derart, dass der gewünschte Einspritzverlauf realisiert wird. Dabei kann sowohl die Einspritzrate (Massenfluss des Brennstoffs pro Zeit) als auch die Eindringtiefe des hohlkegelförmigen Strahls B von Brennstoff in kontrollierter Weise eingestellt werden. Insbesondere ist der Massenfluss des Brennstoffs pro Zeit - zumindest weitgehend - von dem Einspritzdruck entkoppelt, weil er über die Variation des offenen Strömungsquerschnitts der Düsenöffnung einstellbar ist. Insgesamt ergibt sich hieraus eine extrem hohe Flexibilität bezüglich der Einspritzung.

Die erfindungsgemässe Ausgestaltung mit der konischen Sitzfläche 73 und dem mit dieser zusammenwirkenden Schliesskörper hat insbesondere auch den Vorteil, dass der Einspritzdruck, mit welchem der Brennstoff für die Einspritzung zur Verfügung gestellt wird, im Vergleich zu bekannten Grossdieselmotoren deutlich abgesenkt werden kann. Dies insbesondere deshalb, weil das hohlkegelförmige Profil des in den Brennraum eintretenden Brennstoffs bereits ein hohes Mass an Zerstäubung besitzt, der Brennstoff über einen weiten räumlichen Bereich des Brennraums 6 verteilt wird, und der Brennstoff in dem hohlkegelförmigen Profil bereits starke Turbulenzen aufweist, wodurch eine sehr gute Vermischung mit der Drallströmung der Ladeluft im Brennraum gefördert wird. Dadurch ist es beispielsweise möglich, den Grossdieselmotor 1 wirtschaftlich, effizient und schadstoffarm mit einem Einspritzdruck von höchstens 500 bar zu betreiben. Selbst ein Einspritzdruck von nur 350 bar ist ausreichend, um den Grossdieselmotor 1 noch sicher und wirtschaftlich mit Volllast zu betreiben. Für den Volllastbetrieb ist der Einspritzdruck vorzugsweise mindestens 300 bar, im Teillastbetrieb kann der Einspritzdruck bzw. der Druck im Druckspeicher des Common-Rail Systems sogar noch weiter gesenkt werden, beispielsweise auf 150 bar.

Ein weiterer Vorteil resultiert daraus, dass der Schliesskörper 74 zum Öffnen der Düsenöffnung in Richtung des Brennraums 6 bzw. in den Brennraum 6 hinein bewegt wird. Hierdurch existiert - wenn überhaupt - nur ein vernachlässigbar kleines Volumen, das dem Sacklochvolumen bekannter Brennstoffeinspritzdüsen entspricht. Somit löst die erfindungsgemässe Ausgestaltung auch die beschriebenen Probleme, die aus solchen Sacklochbohrungen bzw. -volumen resultieren.

Die geeignete Wahl des Winkels a, unter welchem sich die Sitzfläche 73 in Richtung des Brennraums 6 öffnet, hängt insbesondere von der Geometrie des Brennraums 6 zum Zeitpunkt der Einspritzung ab. Es hat sich gezeigt, dass für den Winkel α ein Wert von mindestens 100°, insbesondere von 110° bis 140°, vorteilhaft ist.

Bezüglich der Anordnung der Brennstoffeinspritzdüse 7 sind mehrere Varianten möglich. Neben der im Zusammenhang mit Fig. 1 erörterten Anordnung mit der Brennstoffeinspritzdüse 7 im Zentrum des Zylinderdeckels 5 und dem seitlich, dezentral angeordneten Auslassventil 8, ist es beispielsweise auch möglich, das Auslassventil 8 im Zentrum des Zylinderdeckels 5 anzuordnen, und eine oder mehrere Brennstoffeinspritzdüse(n) 7 dezentral, z. B. seitlich im Zylinderdeckel 5 vorzusehen. Eine weitere Variante besteht darin, die Brennstoffeinspritzdüse 7 - wie in Fig. 1 dargestellt - zentral im Zylinderdeckel 5 anzuordnen und eine Mehrzahl von Auslassventilen 8 vorzusehen, die im Zylinderdeckel 5 um die zentrale Brennstoffeinspritzdüse 7 herum angeordnet sind. Bei dieser Variante sind vorzugsweise vier Auslassventile 8 vorgesehen.

Selbstverständlich sind auch solche Ausgestaltungen möglich, bei denen eine Mehrzahl von Brennstoffeinspritzdüsen 7 pro Zylinder 2 vorgesehen sind, wobei jede Brennstoffeinspritzdüse 7 eine konische Sitzfläche 73 umfasst, welche sich in Richtung des Brennraums 6 erweitert, sowie einen Schliesskörper 74, welcher in einer Schliessstellung dichtend mit der Sitzfläche 73 zusammenwirkt, und welcher durch eine Hubbewegung von der Sitzfläche 73 abhebbar ist, sodass zwischen der Sitzfläche 73 und dem Schliesskörper 74 eine ringförmige Düsenöffnung ausgebildet ist.

Insbesondere bei einem niedrigen Einspritzdruck von höchstens 500 bar ist es eine weitere Variante, dass die Brennstoffeinspritzdüse 7 im Kolben 3 angeordnet ist. Dabei ist die Brennstoffeinspritzdüse 7 vorzugsweise zentral im Kolben 3 angeordnet, sodass sie aus dem Zentrum der Oberseite 31 des Kolbens 3 in den Brennraum 6 hineinragt. Die Versorgung der Brennstoffeinspritzdüse 7 mit Brennstoff erfolgt dann vorzugsweise durch die Kolbenstange 32 hindurch, d.h. die Brennstoffzuführung 9 erstreckt sich dann im Inneren der Kolbenstange 32.

## Patentansprüche

1. Grossdieselmotor, insbesondere längsgespülter Zweitakt-Grossdieselmotor, mit mindestens einem Zylinder (2), in welchem ein Kolben (3) zwischen einem unteren und einem oberen Umkehrpunkt hin- und her bewegbar angeordnet ist, mit einem Zylinderdeckel (5), wobei der Zylinderdeckel (5) und der Kolben (3) einen Brennraum (6) für einen Brennstoff begrenzen, sowie mit einer Brennstoffeinspritzdüse (7) zum Einbringen des Brennstoffs in den Brennraum (6), **dadurch gekennzeichnet, dass** die Brennstoffeinspritzdüse (7) eine konische Sitzfläche (73) umfasst, welche sich in Richtung des Brennraums (6) erweitert, sowie einen Schliesskörper (74), welcher in einer Schliessstellung dichtend mit der Sitzfläche (73) zusammenwirkt, und welcher durch eine Hubbewegung von der Sitzfläche (73) abhebbar ist, sodass zwischen der Sitzfläche (73) und dem Schliesskörper (74) eine ringförmige Düsenöffnung ausgebildet ist, durch welche der Brennstoff in den Brennraum (6) einbringbar ist.

2. Grossdieselmotor nach Anspruch 1, wobei eine Ansteuervorrichtung (10) für den Schliesskörper (74) vorgesehen ist, mit welcher die Amplitude der Hubbewegung des Schliesskörpers (74) einstellbar ist, sodass ein offener Strömungsquerschnitt der Düsenöffnung veränderbar ist.

3. Grossdieselmotor nach Anspruch 2, wobei die Ansteuervorrichtung (10) als hydraulische Ansteuervorrichtung (10) ausgestaltet ist.

4. Grossdieselmotor nach einem der vorangehenden Ansprüche, wobei ein Federelement (75) vorgesehen ist, welches den Schliesskörper (74) in Richtung der Schliessstellung vorspannt.

5. Grossdieselmotor nach einem der vorangehenden Ansprüche, wobei sich die konische Sitzfläche (73) unter einem Winkel (a) von mindestens 90° erweitert.

6. Grossdieselmotor nach einem der vorangehenden Ansprüche, wobei sich die konische Sitzfläche (73) unter einem Winkel (a) erweitert, der grösser als 90° ist, vorzugsweise grösser als 100°, und der höchstens 140° beträgt.

7. Grossdieselmotor nach einem der vorangehenden Ansprüche, wobei die Brennstoffeinspritzdüse (7) zentral im Zylinderdeckel (5) angeordnet ist, sodass sie mit der Längsachse (A) des Zylinders (2) fluchtet.

8. Grossdieselmotor nach einem der vorangehenden Ansprüche, mit mindestens einem Auslassventil (8), durch welches die Verbrennungsgase aus dem Zylinder (2) abführbar sind, wobei das Auslassventil (8) dezentral, vorzugsweise seitlich, im Zylinderdeckel (5) angeordnet ist.

9. Grossdieselmotor nach einem der vorangehenden Ansprüche, mit mindestens einem Auslassventil (8), durch welches die Verbrennungsgase aus dem Zylinder (2) abführbar sind, wobei das Auslassventil (8) zentral im Zylinderdeckel (5) angeordnet ist, sodass die Längsachse des Auslassventils (8) mit der Längsachse (A) des Zylinders (2) fluchtet.

10. Grossdieselmotor nach einem der Ansprüche 1-8, wobei jeder Zylinder (2) eine Mehrzahl von Auslassventilen (8) aufweist, durch welche die Verbrennungsgase aus dem Zylinder (2) abführbar sind, und wobei die Auslassventile(8) im Zylinderdeckel (5) und um die Brennstoffeinspritzdüse (7) herum angeordnet sind.

11. Grossdieselmotor nach einem der Ansprüche 1-6, wobei die Brennstoffeinspritzdüse (7) im Kolben (3) angeordnet ist.

12. Grossdieselmotor nach eine der vorangehenden Ansprüche, wobei für jeden Zylinder (2) eine Mehrzahl von Brennstoffeinspritzdüsen (7) vorgesehen ist, wobei jede Brennstoffeinspritzdüse (7) eine konische Sitzfläche(73) umfasst, welche sich in Richtung des Brennraums (6) erweitert, sowie einen Schliesskörper (74), welcher in einer Schliessstellung dichtend mit der Sitzfläche (74) zusammenwirkt, und welcher durch eine Hubbewegung von der Sitzfläche (73) abhebbar ist, sodass zwischen der Sitzfläche (73) und dem Schliesskörper (74) eine ringförmige Düsenöffnung ausgebildet ist, durch welche der Brennstoff in den Brennraum (6) einbringbar ist.

13. Grossdieselmotor nach einem der vorangehenden Ansprüche, ausgestaltet als Dual-Fuel Grossdieselmotor, der in einem Flüssigmodus betreibbar ist, in welchem ein flüssiger Brennstoff zur Verbrennung in den Brennraum (6) eingebracht wird, und der ferner in einem Gasmodus betreibbar ist, in welchem ein Gas als Brennstoff in den Brennraum (6) eingebracht wird.

14. Verfahren zum Betreiben eines Grossdieselmotors, der nach einem der vorangehenden Ansprüche ausgestaltet ist, wobei für das Einbringen des Brennstoffs in den Brennraum (6) ein Einspritzverlauf vorgegeben wird, und wobei die Amplitude der Hubbewegung des Schliesskörpers (74) während des Einbringens des Brennstoffs gemäss dem vorgegebenen Einspritzverlauf verändert wird.

15. Verfahren nach Anspruch 14, wobei der Brennstoff an jeder Brennstoffeinspritzdüse mit einem Einspritzdruck von höchstens 500 bar bereitgestellt wird.
